# EUROPÄISCHE PATENTSCHRIFT

(11) **EP 4 155 130 B1**
(45) Veröffentlichungstag und Bekanntmachung des Hinweises auf die Patenterteilung: **30.10.2024**
(21) Anmeldenummer: 22195010.8
(22) Anmeldetag: 12.09.2022
(51) Int. Cl.: B60R 3/02

(54) **ZUGANGSVORRICHTUNG FÜR EIN ARBEITSGERÄT**
ACCESS DEVICE FOR A WORKING DEVICE
DISPOSITIF D'ACCÈS POUR UN OUTIL DE TRAVAIL

(30) Priorität: 27.09.2021 DE 102021124933
(43) Veröffentlichungstag der Anmeldung: 29.03.2023
(73) Patentinhaber: Liebherr-Werk Ehingen GmbH, 89584 Ehingen/Donau (DE)
(72) Erfinder: DENZ, Christoph, 88444 Ummendorf (DE)
(74) Vertreter: Laufhütte, Dieter

(56) Entgegenhaltungen:
- EP-A1- 2 481 275
- AU-A1- 2005 200 785
- DE-A1- 102017 004 545
- DE-A1- 2 623 267
- DE-U1- 202020 106 371
- US-A1- 2009 065 301

## Beschreibung

Die vorliegende Erfindung betrifft eine Zugangsvorrichtung für ein Arbeitsgerät mit einer Wange, mindestens zwei seitlich und in der Höhe zueinander versetzten und schwenkbar an der Wange gelagerten Stufen und einer die Stufen miteinander verbindenden Führungsleiste, sowie ein Arbeitsgerät mit einer solchen Zugangsvorrichtung.

Bei vielen Arbeitsgeräten ist ein Zugang des Bedienpersonals zu erhöhten Bereichen wie beispielsweise einer Fahrerkabine erforderlich. Gerade bei mobilen Arbeitsgeräten kommen hierbei häufig Leitern oder Treppen zum Einsatz, über welche das Bedienpersonal vom Boden aus die erhöhten Bereiche erreichen kann.

Bei Raupenkranen erfolgt der Zugang zum Oberwagen typischerweise über die Raupenträger oder direkt über eine am Oberwagen befestigte Leiter oder Treppe. Bei Verwendung einer Treppe dürfen die durch Normvorgaben geforderten Mindestmaße nicht unterschritten werden (FEM 5.022, 1. Auflage, 28.05.2015: Lichte Weite ≥ 400 mm, Stufenhöhe = 250 mm, Auftrittbreite ≥ 300 mm). Bei Leitern müssen dagegen beidseitig Griffe bzw. Geländer vorgesehen sein, um stets eine Dreipunktabstützung zu gewährleisten. Da für den Transport von Raupenkranen im Straßenverkehr die zulässigen Transportbreiten einzuhalten sind, kommen häufig klappbare oder demontierbare Treppen oder Leitern zum Einsatz, welche in eine Transportstellung geklappt oder verstaut werden können.

Eine aus dem Stand der Technik bekannte Lösung sieht beispielsweise zwei oder drei Einzelstufen vor, die schwenkbar an der Außenseite eines Raupenträgers gelagert sind. Hierbei ergeben sich jedoch einige Nachteile. So benötigt jede Einzelstufe ihre eigene Lagerung, was am Raupenträger oft nicht an der optimalen Position möglich ist. Ferner ist die Größe der Einzelstufen durch das Schwenken in die Transportstellung (in der die Stufen am Raupenträger anliegen) begrenzt, sodass die vorgenannten Mindestmaße teilweise unterschritten werden. Darüber hinaus ist das Ein- und Ausklappen der einzelnen Stufen mühsam und zeitaufwendig (beispielsweise sind bei vier Treppen - an jedem Raupenträger eine vorne und eine hinten - mit jeweils drei Einzelklappstufen insgesamt 12 Stufen ein- und auszuklappen).

Eine weitere Möglichkeit besteht darin, eine Treppe zu verwenden, welche direkt am Raupenträger ein- und ausgehängt wird. Zum Transport wird die Treppe ausgehängt und in einer extra vorgesehenen Transportposition, beispielsweise seitlich am Raupenträger, verstaut. Hierbei muss jedoch darauf geachtet werden, dass die Treppe nicht zu schwer ist (z.B. < 20 kg), um von einer Person gehandhabt werden zu können. Darüber hinaus ist die Treppe relativ sperrig, was das Ein- und Aushängen sowie das Tragen erschwert - insgesamt ebenfalls ein mühsamer und zeitaufwändiger Vorgang. Ebenfalls benötigt die lose Treppe eine zusätzliche Transportposition. Wird dagegen eine Leiter verwendet, so müssen immer zusätzliche Handgriffe oder Haltestangen bzw. ein Geländer vorgesehen sein, um eine Dreipunktabstützung zu gewährleisten. Dies ist konzeptbedingt am Unterwagen nicht überall möglich.

Ebenfalls kann eine Treppe am Oberwagen außerhalb des größten Drehradius des Raupenfahrwerks auskragend angebracht sein, sodass beim Drehen des Oberwagens die Treppe nicht mit den Raupenträgern bzw. -ketten kollidiert. Dies ist jedoch ab einer bestimmten Krangröße nicht mehr komfortabel und sinnvoll möglich. In einem solchen Fall müsste die Treppe ggf. mit einem Teil des Podestes abgenommen (eventuell sogar mit einem Hilfskran) und separat transportiert werden.

US 2009/065301 A1 offenbart eine weitere Zugangsvorrichtung mit einer Treppe, welche um eine geneigte Drehachse von einer Betriebsstellung in eine Transportstellung verschwenkt werden kann.

Vor diesem Hintergrund liegt der vorliegenden Erfindung die Aufgabe zugrunde, eine Zugangsvorrichtung für ein Arbeitsgerät, insbesondere einen fahrbaren Kran, bereitzustellen, welche die vorgenannten Nachteile überwindet. Die Zugangsvorrichtung soll insbesondere einfach und schnell in eine platzsparende Transportposition bewegt werden können und dabei die Anforderungen an die Mindestmaße erfüllen können.

Erfindungsgemäß wird diese Aufgabe durch eine Zugangsvorrichtung mit den Merkmalen des Anspruchs 1 gelöst. Vorteilhafte Ausführungsformen der Erfindung ergeben sich aus den Unteransprüchen und der nachfolgenden Beschreibung.

Demnach wird eine Zugangsvorrichtung für ein Arbeitsgerät, insbesondere für einen fahrbaren Kran, weiter insbesondere für einen Raupenkran, vorgeschlagen, welche eine Wange, mindestens zwei seitlich und in der Höhe zueinander versetzte und um jeweils eine vertikale erste Drehachse schwenkbar an der Wange gelagerte Stufen sowie eine die Stufen miteinander verbindende Führungsleiste umfasst. Die Zugangsvorrichtung bildet somit insbesondere eine Treppe, über die ein erhöhter Bereich des Arbeitsgeräts, beispielsweise die Oberseite eines Raupenträgers oder der Oberwagen eines Raupenkrans, bestiegen werden kann.

Die Führungsleiste ist mit jeder der Stufen an deren der Wange gegenüberliegenden Ende über je ein Verbindungselement derart schwenkbar verbunden, dass die Stufen gemeinsam um ihre ersten Drehachsen von einer Zugangsstellung, in der die Stufen seitlich von der Wange abstehen und die Zugangsvorrichtung begehbar ist, in eine Transportstellung, in der die Stufen platzsparend an der Wange anliegen, bewegbar sind und umgekehrt.

Die erfindungsgemäße Konstruktion ermöglicht ein Verschwenken der gesamten Zugangsvorrichtung, d.h. aller durch die Führungsleiste verbundener Stufen. Dadurch ergibt sich nicht nur eine Vereinfachung der Bewegung der Zugangsvorrichtung zwischen der Transportstellung und der Zugangsstellung, sondern auch eine damit einhergehende signifikante Zeitersparnis. Der erforderliche Aufwand wird für sämtliche Stufen (hierbei kann es sich selbstverständlich um mehr als zwei Stufen handeln) auf weniger Handgriffe reduziert. Die Führungsleiste verhindert ferner ein Abrutschen über das seitliche Ende der Stufen hinaus beim Auf- und Absteigen. Darüber hinaus muss die Zugangsvorrichtung bzw. deren Bestandteile nicht ausgebaut werden, sondern es sind lediglich die Stufen um ihre vertikalen Achsen zu verschwenken. Dies ist auch bei schweren Bauteilen mit nur geringem Kraftaufwand möglich. Auch die Anzahl loser Teile ist bei der vorliegenden Erfindung dadurch deutlich reduziert.

Die Bezeichnung "an der Wange anliegen" bedeutet nicht, dass die Stufen wirklich unmittelbar an der Wange anliegen müssen. Stattdessen soll damit lediglich zum Ausdruck gebracht werden, dass die Stufen in der Transportstellung in Richtung Wange angeklappt bzw. zur Wange hin verschwenkt sind. Beispielsweise kann die Wange mehr oder weniger in einer Ebene verlaufen, wobei die Stufen in der Transportstellung in Richtung dieser Ebene verschwenkt sind bzw. an dieser gedachten Ebene anliegen.

Der Begriff "Führungsleiste" ist breit auszulegen und kann ein beliebiges Element bezeichnen, das die verschiedenen Stufen miteinander verbindet. Die Führungsleiste kann dabei, muss aber nicht, tatsächlich die Form einer Leiste aufweisen. Auch der Begriff "Wange" ist nicht einschränkend auszulegen, sondern kann jedwedes Element bezeichnen, an dem die einzelnen Stufen schwenkbar gelagert sind. Die Wange kann, muss aber nicht, eine im Wesentlichen flache Form aufweisen.

Wenn vorliegend von einer vertikalen Achse bzw. Richtung gesprochen wird, dann ist der Fall gemeint, dass das entsprechende Arbeitsgerät auf einem horizontal verlaufenden Untergrund steht.

In einer möglichen Ausführungsform ist vorgesehen, dass in der Zugangsstellung, in der Transportstellung sowie in jeder der Zwischenstellung zwischen diesen beiden Endpositionen die Längsachsen der einzelnen Stufen zueinander parallel verlaufen. Alternativ oder zusätzlich können auch die Längsachsen der Wange und der Führungsleiste zueinander stets parallel verlaufen.

Es kann vorgesehen sein, dass die Wange und die Führungsleiste in Draufsicht in der Zugangsstellung seitlich nebeneinander verlaufen und in der Transportstellung in Draufsicht einen geringeren Abstand zueinander aufweisen oder sogar zumindest teilweise übereinanderliegen.

In einer weiteren möglichen Ausführungsform ist vorgesehen, dass die Führungsleiste mit jeder Stufe über das jeweilige Verbindungselement um eine zweite und dritte Drehachse schwenkbar verbunden ist, wobei die zweiten und die dritten Drehachsen nicht parallel zueinander stehen. Vorzugsweise steht die zweite Drehachse senkrecht zur dritten Drehachse und/oder senkrecht zur ersten Drehachse der jeweiligen Stufe.

Die Verbindungselemente mit ihren Freiheitsgraden sorgen dafür, dass alle Stufen gemeinsam um ihre ersten Drehachsen verschwenkt werden können und gleichzeitig über die Führungsleiste verbunden bleiben. Um diese Bewegung zu ermöglichen, sind die vorstehend beschriebenen Bewegungsfreiheitsgrade um die zweiten und dritten Drehachsen notwendig. Dabei kann es sich um einzelne, definierte Drehachsen handeln. Alternativ können die Verbindungselemente auch kompliziertere Bewegungsmöglichkeiten bereitstellen, beispielsweise eine Bewegung um mehr als zwei Achsen, eine Kugelgelenkverbindung oder dergleichen.

In einer weiteren möglichen Ausführungsform ist vorgesehen, dass die Verbindungselemente an den Stirnseiten der Stufen um die zweiten Drehachsen drehbar befestigt und um die dritten Drehachsen schwenkbar mit der Führungsleiste verbunden sind. Bei der Schwenkbewegung der Stufen um ihre ersten Drehachsen, drehen sich die Verbindungselemente um die zweiten Drehachsen während sich die Führungsleiste insbesondere zumindest teilweise von den Verbindungselementen entfernt und dabei eine Schwenkbewegung um die dritten Drehachsen ausführt. Vorzugsweise sind die Verbindungselemente klammerförmig, insbesondere U-förmig, ausgebildet und umgreifen die Führungsleiste in der Zugangsstellung zumindest teilweise. Alternativ können die Verbindungselemente selbstverständlich eine andere Form aufweisen, z.B. eine flache Form, d.h. ohne die Führungsleiste zu umgreifen.

In einer weiteren möglichen Ausführungsform ist vorgesehen, dass die Stufen klappbar ausgeführt sind und jeweils ein Schwenkteil und ein mit dem Schwenkteil verbundenes Klappteil umfassen. Die Schwenkteile der Stufen sind dabei um die ersten Drehachsen schwenkbar an der Wange gelagert. Die Klappteile sind mit den jeweiligen Schwenkteilen jeweils um eine vierte Drehachse schwenkbar verbunden. Vorzugsweise verlaufen die vierten Drehachsen parallel zu den Längsachsen der Stufen und/oder senkrecht zu den jeweiligen ersten Drehachsen.

Die Bewegung der erfindungsgemäßen Zugangsvorrichtung von der Zugangsstellung in die Transportstellung umfasst somit ein Einklappen der Stufen um die vierten Drehachsen sowie ein Verschwenken der Stufen um die ersten Drehachsen. Es handelt sich also um eine klapp- und schwenkbare Zugangsvorrichtung bzw. Treppe. All diese Bewegungen werden simultan für alle Stufen durchgeführt, da diese über die Führungsleiste und die entsprechenden Verbindungselemente miteinander verbunden sind.

In einer weiteren möglichen Ausführungsform ist vorgesehen, dass die Schwenkteile und Klappteile jeweils Trittflächen (d.h. Oberflächen, welche beim Besteigen der Zugangsvorrichtung betreten werden können) aufweisen, welche in einer aufgeklappten ersten Stellung eine gemeinsame Trittfläche bilden und in einer zugeklappten zweiten Stellung aufeinander liegen (also einander gegenüber liegen). Die gemeinsame Trittfläche muss hierbei keine lückenlose Fläche bilden. Insbesondere die Bereiche um die vierte Drehachse herum können kleine Spalten umfassen. Ferner bedeutet das Merkmal, dass die Trittflächen in der zweiten Stellung aufeinander liegen, nicht zwangsläufig, dass diese sich berühren. Letzteres stellt zwar die einfachste Ausführungsform dar, allerdings ist es auch denkbar, entsprechende Anschläge an den Stufen vorzusehen, welche einander in der zweiten Stellung kontaktieren.

Vorzugsweise sind an den Schwenk- und Klappteilen Anschläge vorgesehen, welche ein Überschwenken der Klappteile über die erste Stellung hinaus verhindern. Mit anderen Worten wirken diese Anschläge zusammen, wenn die Stufen aufgeklappt sind und sich somit in der ersten Stellung befinden.

In einer weiteren möglichen Ausführungsform ist vorgesehen, dass die Führungsleiste mit den Klappteilen jeweils um eine zur vierten Drehachse parallele Drehachse drehbar verbunden ist, sodass die Klappteile um die jeweiligen vierten Drehachsen gemeinsam verschwenkbar sind. Bei besagter Drehachse handelt es sich insbesondere um die zuvor beschriebene zweite Drehachse. Die Führungsleiste ist also mit den Stufen ausschließlich über die Klappteile verbunden, sodass ein Auf- und Zuklappen der Stufen gemeinsam erfolgt. Hierbei erfolgt eine relative Drehung der Klappteile zur Führungsleiste um die zweiten Drehachsen. Vorzugsweise erfolgt hierbei jedoch keine Bewegung um die dritten Drehachsen.

In einer weiteren möglichen Ausführungsform ist vorgesehen, dass seitlich an der Wange je Stufe mindestens ein Befestigungselement vorgesehen ist, welches insbesondere unterhalb der jeweiligen Stufe angeordnet ist und mit welchen die Stufen um die ersten Drehachsen schwenkbar verbunden sind. Vorzugsweise sind je Stufe zwei Befestigungselemente vorgesehen, welche oberhalb und unterhalb der jeweiligen Stufe angeordnet sind und mit welchen die Stufen um die ersten Drehachsen schwenkbar verbunden sind.

Es kann vorgesehen sein, dass die Schwenkteile der Stufen entsprechende Auskragungen oder Bleche aufweisen, die schwenkbar mit den Befestigungselementen verbunden sind. Um eine Schwenkbewegung um die erste Drehachse zu ermöglichen und hierbei nicht mit der Wange zu kollidieren, können diese Auskragungen oder Bleche entsprechend abgerundet und/oder abgeschrägt sein. Die Befestigungselemente nehmen vorzugsweise sämtliche Kräfte auf, die beim Betreten der Zugangsvorrichtung wirken, und sind entsprechend ausgebildet bzw. dimensioniert.

In einer weiteren möglichen Ausführungsform ist vorgesehen, dass die Zugangsvorrichtung einen Träger umfasst, welcher mit der Wange verbunden oder an dieser ausgebildet ist und welcher Verbindungsmittel aufweist, über die der Träger mit einer Struktur, insbesondere einem Arbeitsgerät, verbindbar oder verbunden ist. Vorzugsweise bilden die Verbindungsmittel eine vertikale fünfte Drehachse, um die der Träger und somit die gesamte Zugangsvorrichtung relativ zur Struktur verschwenkbar ist. Somit können nicht nur die Stufen um die ersten Drehachsen verschwenkt werden, sondern zusätzlich kann die gesamte Zugangsvorrichtung um die fünfte Drehachse verschwenkt werden. Bei der Struktur kann es sich um einen Raupenträger handeln.

Dadurch ist es möglich, eine Zugangsstellung zu definieren, bei welcher die Zugangsvorrichtung einem bestimmten Winkel zum Arbeitsgerät einnimmt, sodass ein Zugang leichter möglich ist. Ebenfalls ist es denkbar, dass mehrere Zugangsstellungen vorhanden sind, beispielsweise eine erste Zugangsstellung, bei der die Zugangsvorrichtung nicht um die fünfte Drehachse verschwenkt ist (= Einklappstellung) und eine zweite Zugangsstellung, bei der sie um einen bestimmten Winkel, beispielsweise 30°, um die fünfte Drehachse verschwenkt ist (= Ausklappstellung).

In einer weiteren möglichen Ausführungsform ist vorgesehen, dass der Träger eine erste Verriegelungsvorrichtung umfasst, mittels welcher der Träger jeweils in einer Einklappstellung und in einer relativ dazu um die fünfte Drehachse verschwenkten Ausklappstellung lösbar verriegelbar ist, wobei die erste Verriegelungsvorrichtung vorzugsweise derart ausgebildet ist, dass sie in der Einklappstellung und in der Ausklappstellung automatisch einrastet und nur durch eine Betätigung wieder entriegelbar ist. Hierfür kann ein entsprechender Federmechanismus vorgesehen sein. Die Betätigung zur Entriegelung erfolgt insbesondere manuell, beispielsweise durch Betätigung eines Griffs, oder alternativ durch einen Aktuator. Im verriegelten Zustand ist ein Verschwenken der Zugangsvorrichtung um die fünfte Drehachse nicht möglich, sodass die Zugangsvorrichtung gesichert ist.

In einer weiteren möglichen Ausführungsform ist vorgesehen, dass die Zugangsvorrichtung eine zweite Verriegelungsvorrichtung umfasst, mittels welcher die Zugangsvorrichtung in der Zugangsstellung und/oder in der Transportstellung lösbar verriegelbar ist, wobei die zweite Verriegelungsvorrichtung vorzugsweise derart ausgebildet ist, dass sie in der Zugangsstellung und/oder in der Transportstellung automatisch einrastet und nur durch insbesondere manuelle Betätigung wieder entriegelbar ist. Die Betätigung zur Entriegelung erfolgt insbesondere manuell, beispielsweise durch Betätigung eines Griffs, oder alternativ durch einen Aktuator. Im verriegelten Zustand ist ein Verschwenken der Stufen um die ersten Drehachsen nicht möglich, sodass die Zugangsvorrichtung gesichert ist. Es können mehrere solcher Verriegelungsvorrichtungen vorgesehen sein.

In einer weiteren möglichen Ausführungsform ist vorgesehen, dass die Zugangsvorrichtung mindestens drei Stufen umfasst. Die Stufen können alle identisch ausgebildet und/oder gleichmäßig voneinander beabstandet sein. Die Stufen haben vorzugsweise eine rechteckige Grundfläche.

In einer weiteren möglichen Ausführungsform ist vorgesehen, dass die Zugangsvorrichtung einen Handgriff oder Handlauf umfasst, in welchem sich Personal, das die Zugangsvorrichtung besteigt, festhalten kann. Der Handgriff oder Handlauf kann an der Wange oder am zuvor beschriebenen Träger vorgesehen sein.

In einer weiteren möglichen Ausführungsform ist vorgesehen, dass die Stufen einen Höhenunterschied (bzw. eine Stufenhöhe) von ca. 250 mm und/oder eine Breite entlang der Stufenlängsachse (bzw. lichte Weite) von ≥ 400 mm und/oder eine Breite senkrecht zur Stufenlängsachse (bzw. Auftrittbreite) von ≥ 300 mm aufweisen.

Die vorliegende Erfindung betrifft weiterhin ein Arbeitsgerät, insbesondere einen fahrbaren Kran, weiter insbesondere einen Raupenkran, mit mindestens einer erfindungsgemäßen Zugangsvorrichtung. Dabei ergeben sich offensichtlich dieselben Vorteile und Eigenschaften wie für die erfindungsgemäße Zugangsvorrichtung, weshalb an dieser Stelle auf eine wiederholende Beschreibung verzichtet wird. Die Zugangsvorrichtung ist vorzugsweise permanent am Arbeitsgerät befestigt, muss also nicht extra an- und abgebaut werden. Somit verbleibt die Zugangsvorrichtung auch bei einem Transport am Arbeitsgerät.

In einer möglichen Ausführungsform ist vorgesehen, dass das Arbeitsgerät einen Unterwagen mit zwei Raupenträgern und einen um eine vertikale Achse drehbar auf dem Unterwagen gelagerten Oberwagen umfasst, wobei mindestens einer der Raupenträger an dessen Außenseite eine erfindungsgemäße Zugangsvorrichtung aufweist und die Zugangsvorrichtung in der Transportstellung nicht über die Außenkontur des Raupenträgers hinausragt. Somit wird bei einem Transport des Arbeitsgeräts die zulässige Transportbreite nicht überschritten bzw. die Transportbreite nicht vergrößert. Am Oberwagen kann ein Ausleger, beispielsweise ein Teleskopausleger, schwenkbar gelagert sein. Ebenfalls kann ein Oberwagenballast vorgesehen sein.

Weitere Merkmale, Einzelheiten und Vorteile der Erfindung ergeben sich aus dem nachfolgend anhand der Figuren erläuterten Ausführungsbeispiel. Es zeigen:
- Figur 1:: einen aus dem Stand der Technik bekannten Teleskopraupenkran in einer Seitenansicht;
- Figuren 2-3:: die erfindungsgemäße Zugangsvorrichtung gemäß einem Ausführungsbeispiel in verschiedenen Ansichten;
- Figuren 4-6:: perspektivische Ansichten der erfindungsgemäßen Zugangsvorrichtung in unterschiedlichen Stellungen;
- Figuren 7-8:: einen Raupenträger mit Zugangsvorrichtung in einer eingeschwenkten Stellung (Einklappstellung) in unterschiedlichen Ansichten;
- Figur 9:: den Raupenträger gemäß Figur 8 mit ausgeschwenkter Zugangsvorrichtung (Ausklappstellung);
- Figur 10:: die Zugangsvorrichtung in der Ausklappstellung in einer Draufsicht; und
- Figur 11:: eine Teilansicht des Raupenträgers in einer Draufsicht auf die Zugangsvorrichtung und den unteren Teil der Raupenkette, wobei sich die Zugangsvorrichtung in der Transportstellung befindet.

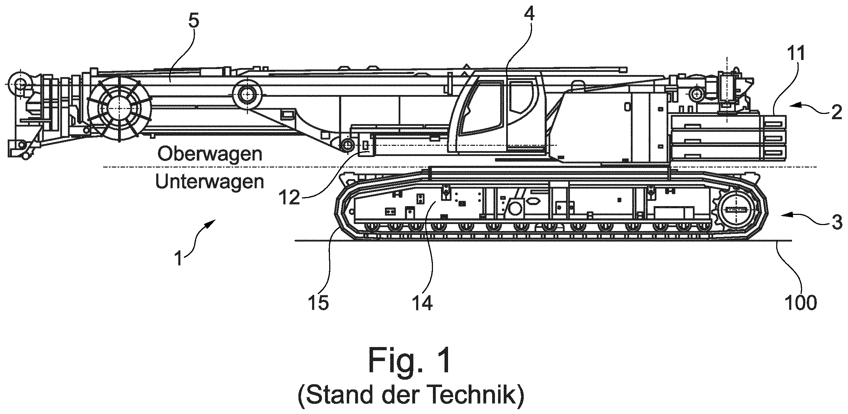

Die erfindungsgemäße Zugangsvorrichtung kann bei unterschiedlichen Arbeitsgeräten zum Einsatz kommen, um erhöhte Bereiche wie zum Beispiel eine Fahrerkabine erreichen zu können. Als Beispiel für ein solches Arbeitsgerät dient im Folgenden ein Teleskopraupenkran 1, welcher in der Figur 1 in einer seitlichen Ansicht dargestellt ist. Selbstverständlich ist die Verwendung der erfindungsgemäßen Zugangsvorrichtung nicht auf dieses konkrete Ausführungsbeispiel beschränkt, sondern kann an einem beliebigen anderen Arbeitsgerät mit oder ohne Raupenträgern zum Einsatz kommen.

Der in der Figur 1 dargestellte Teleskopraupenkran 1 weist einen fahrbaren Unterwagen 3 mit einem zwei Raupenträger 14 mit jeweils umlaufender Raupenkette 15 umfassenden Raupenfahrwerk und einen um eine vertikale Achse drehbar auf dem Unterwagen 3 gelagerten Oberwagen 2 auf. Die Raupenträger 14 sind an einem Unterwagenrahmen befestigt. Der Oberwagen 2 umfasst einen schwenkbar gelagerten Teleskopausleger 5, welcher mittels eines Wippantriebs bzw. Wippzylinders 12 auf- und abwippbar ist. Am Heck des Oberwagens 2 befindet sich ein Oberwagenballast 11 mit mehreren Gegengewichtsplatten. Ferner umfasst der Oberwagen 2 eine Krankabine 4. Um diese zu erreichen, muss der Kranfahrer den Oberwagen 2 (bzw. dessen Drehbühne) erklimmen, da sich die Krankabine 4 in erhöhter Position befindet. Vom Boden 100 aus ist daher ein Zugang über den Unterwagen 3 zum Oberwagen 2 zu schaffen. Dieser sollte idealerweise in allen Drehstellungen des Oberwagens 2 möglich und sicher sein. Hierfür sind diverse Regelungen zu beachten.

Bisher wurde dies, wie eingangs erläutert, durch schwenkbar seitlich am Raupenträger 14 gelagerte Einzelstufen, eine abnehmbare Treppe am Unterwagen oder eine am Oberwagen 2 abnehmbar befestigte Leiter oder Treppe ermöglicht. Aufgrund der sich daraus ergebenden und ebenfalls eingangs beschriebenen Nachteile, schlägt die vorliegende Erfindung nun ein neuartiges Konzept vor, um einen einfachen, sicheren und schnell herzustellenden Zugang zum Oberwagen 2 bzw. zur Krankabine 4 zu ermöglichen.

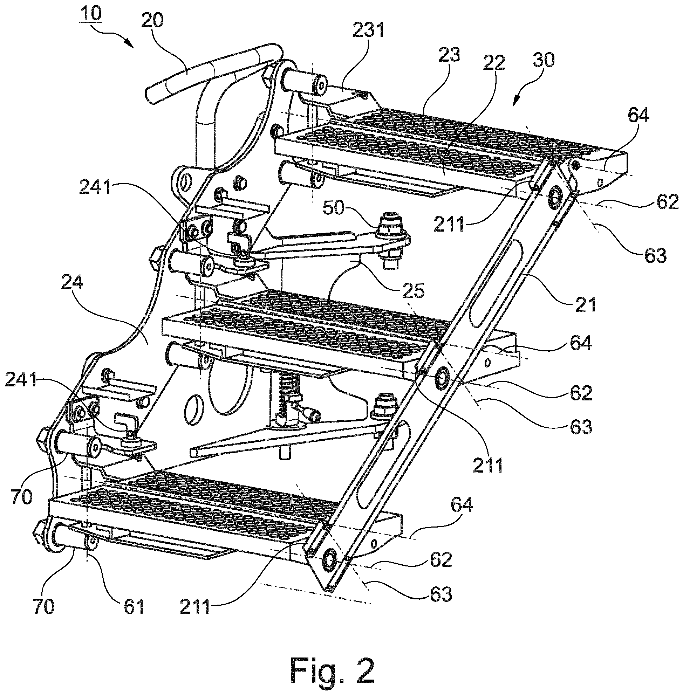

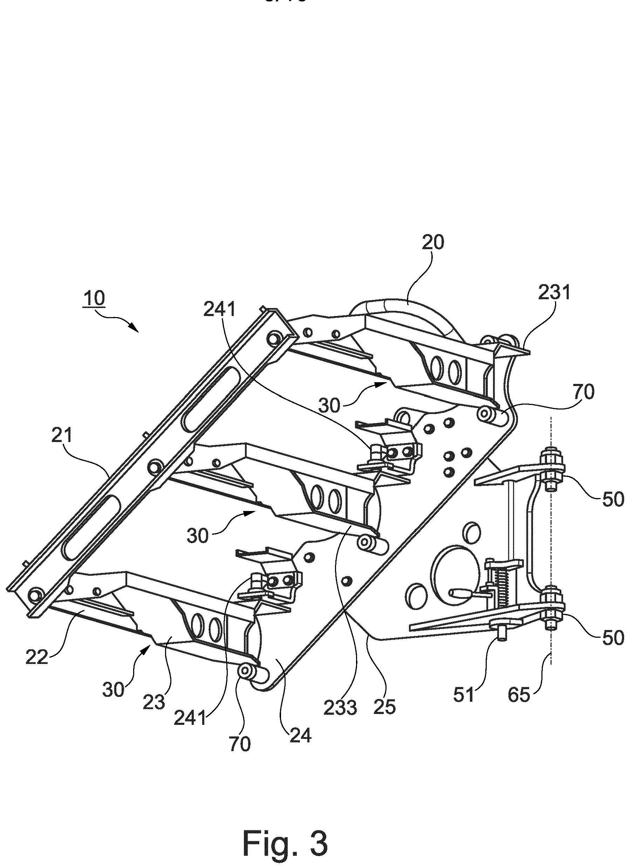

Ein Ausführungsbeispiel der erfindungsgemäßen Zugangsvorrichtung 10 ist in den Figuren 2-6 dargestellt, wobei die Figuren 2 und 3 die vollständig ausgeklappte und ausgeschwenkte (= Zugangsstellung) Zugangsvorrichtung 10 in perspektivischen Ansichten mit Blick auf die Vorderseite (Figur 2) und die Rückseite (Figur 3) zeigen.

Die Zugangsvorrichtung 10 ist als klapp- und schwenkbare Treppe (im Folgenden auch als Klapp-Schwenk-Treppe 10 bezeichnet) ausgebildet und umfasst einen Schwenkrahmen 25 (= Träger), eine mit letzterem starr verbundene Wange bzw. Treppenwange 24 sowie drei schwenkbar an der Wange 24 gelagerte Stufen bzw. Treppenstufen 30. Selbstverständlich sind auch Ausführungsformen mit nur zwei oder mit mehr als drei Stufen 30 möglich. Über den Schwenkrahmen 25 ist die Zugangsvorrichtung 10 seitlich an einem Raupenträger 14 befestigt, sodass der Oberwagen 2 über die Zugangsvorrichtung 10 vom Boden 100 aus erreicht werden kann.

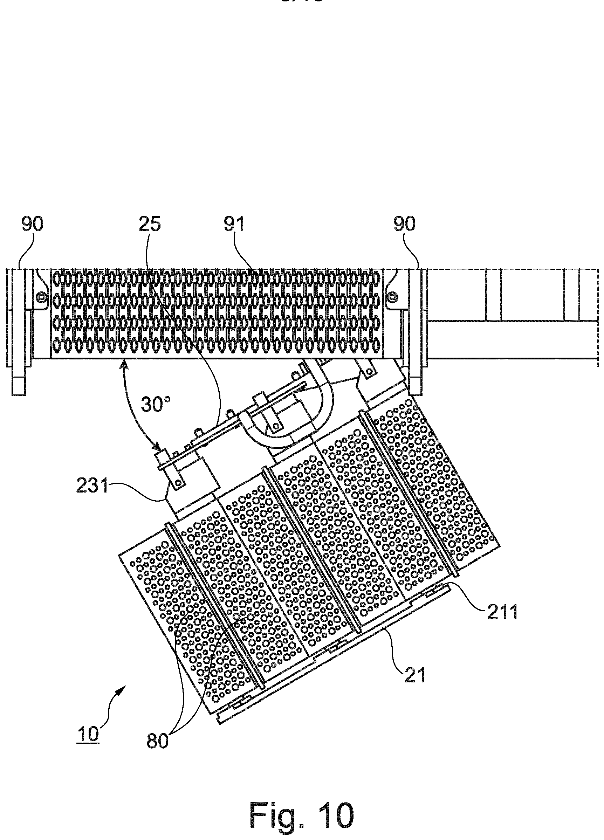

Die im Wesentlichen flache bzw. leistenförmige Wange 24 verläuft schräg, wobei die Stufen 30 in gleichmäßigen Abständen daran angeordnet sind. An den Stirnseiten der Stufen 30, die der Wange 24 gegenüberliegen, befindet sich eine Führungsleiste 21, die sämtliche Stufen 30 miteinander verbindet. Die Führungsleiste 21 ist flach bzw. leistenförmig ausgebildet und weist in den Bereichen zwischen den Stufen 30 Aussparungen auf (diese sind jedoch nur optional, um Gewicht zu sparen). Die Führungsleiste 21 dient dem Abschluss der Stufen 30 und als Begrenzung der Auftrittsflächen 80 (vgl. Figur 10). Sie führt sozusagen den Kranbediener. Darüber hinaus sorgt sie zusammen mit den weiter unten beschriebenen Verbindungselementen 211 dafür, dass alle Stufen 30 gemeinsam bewegt werden können.

Am Schwenkrahmen 25 ist ein Handgriff 20 befestigt. Dieser dient dem vorgabegerechten Aufstieg vom Boden 100 aus. Die erste bzw. unterste Stufe 30 ist im gezeigten Ausführungsbeispiel ca. 500 mm vom Boden 100 beabstandet (andere Abstände sind selbstverständlich ebenfalls denkbar), weshalb ein Handgriff 20 vorteilhaft ist.

Die Stufen 30 sind klappbar ausgeführt und umfassen jeweils ein Schwenkteil 23, welches um eine vertikale erste Drehachse 61 schwenkbar an der Wange 24 gelagert ist, und ein Klappteil 22, welches um eine horizontale vierte Drehachse 64 schwenkbar mit dem Schwenkteil 23 verbunden ist. Die vierte Drehachse 64 verläuft also parallel zur Längsachse der Stufe 30 bzw. zu den Längsachsen der Schwenk- und Klappteile 22, 23 und senkrecht zur ersten Drehachse 61. Anstelle einer solchen gelenkigen Verbindung mit einer durchgängigen physischen Schwenkachse könnte auch ein anderer Klappmechanismus zum Einsatz kommen, beispielsweise über zwei Gelenke in den Bereichen der Stirnseiten der Schwenk- und Klappteile 22, 23. Bei einem Verschwenken der Stufen 30 schwenken also immer Schwenk- und Klappteile 22, 23 gemeinsam um die jeweilige erste Drehachse 61.

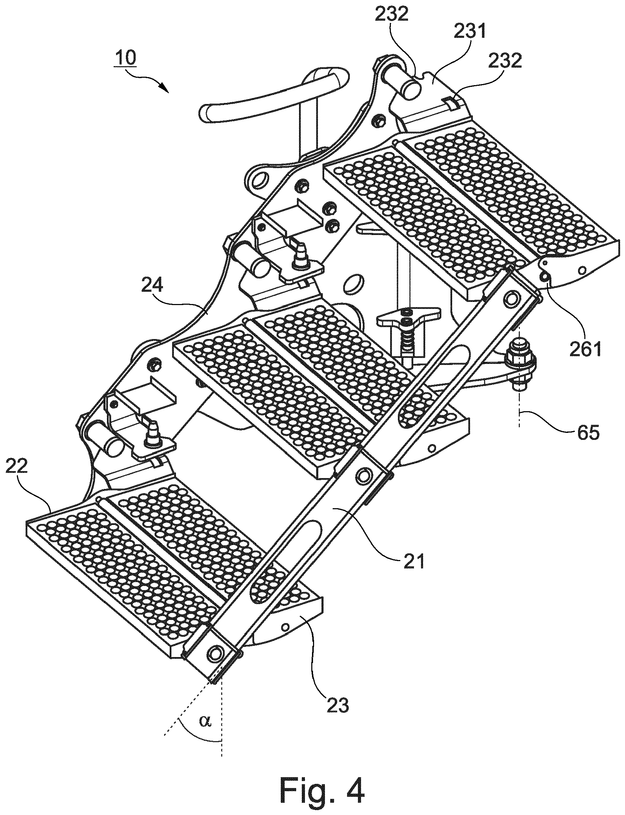

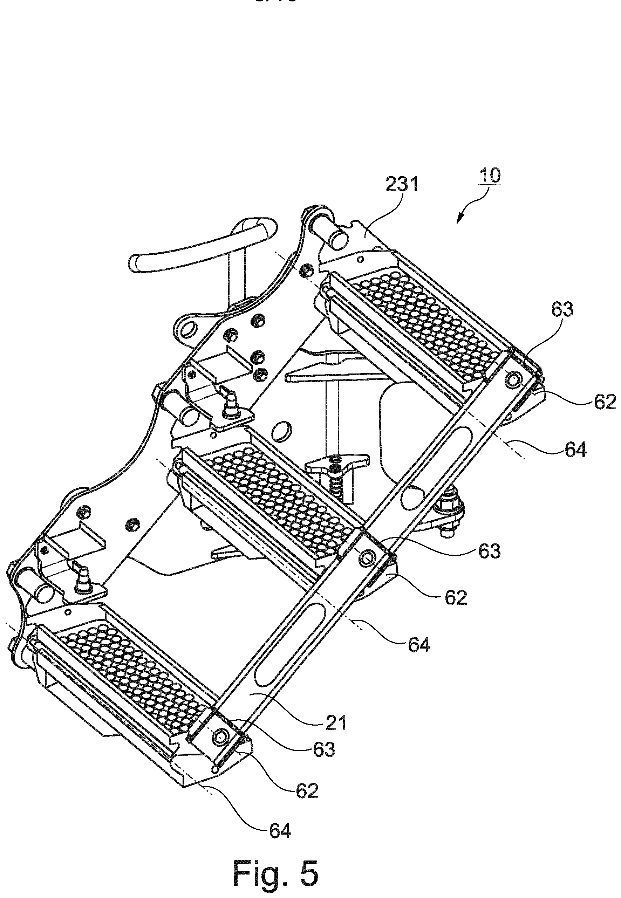

Die Figuren 2-4 zeigen die Stufen 30 in einer aufgeklappten ersten Stellung, in der die Trittflächen 80 der Schwenk- und Klappteile 22, 23 parallel ausgerichtet sind und pro Stufe 30 eine gemeinsame Trittfläche bilden. An den Unterseiten der Schwenk- und Klappteile 22, 23 befinden sich geeignete Anschläge 221 (vgl. Figur 4), die ein Überschwenken des Klappteils 22 über die erste Stellung hinaus verhindern. Sie sind ausreichend dimensioniert, um die bei Benutzung auftretenden Kräfte aufnehmen zu können. Durch Verschwenken bzw. Umklappen der Klappteile 22 um die vierten Drehachsen 64 können die Stufen 30 in eine zugeklappte zweite Stellung gebracht werden, in denen die Trittflächen 80 der Schwenk- und Klappteile 22, 23 aufeinanderliegen bzw. zueinander weisen (vgl. Figur 5).

Die Stufen 30 sind über jeweils zwei Befestigungselemente 70 seitlich an der Wange 24 gelagert. Im hier gezeigten Ausführungsbeispiel weisen die Befestigungselemente 70 eine zylindrische Form auf. Die Befestigungselemente 70 befinden sich oberhalb und unterhalb der jeweiligen Stufen 30 und sind jeweils mit einem oberen Blech 231 und einem unteren Blech 233 der Schwenkteile 23 gelenkig verbunden (vgl. Figur 3). Diese Bleche 231, 233 sind seitlich an den Schwenkteilen 23 angeordnet und derart geformt (insbesondere abgerundet und/oder abgeschrägt), dass für eine Schwenkbewegung (der zugeklappten Stufen 30) genügend Freiraum vorhanden ist und sie dabei nicht die Wange 24 berühren. Die Drehverbindung zwischen den Blechen 231, 233 und den Befestigungselementen 70 bildet die erste Drehachse 61 der jeweiligen Stufe 30. Die Stufen 30 sind auskragende Elemente. Folglich sind diese Gelenkverbindungen entsprechend zu dimensionieren.

Die Führungsleiste 21 ist jeweils mit den Klappteilen 22 der Stufen 30 verbunden, sodass sämtliche Stufen 30 nur gemeinsam um die ersten Drehachsen 61 verschwenkt und um die vierten Drehachsen 64 geklappt werden können. Die Führungsleiste 21 ist über Verbindungselemente 211 mit den Stirnseiten der Klappteile 22 verbunden. Jedes der Verbindungselemente 211 ist um eine zweite Drehachse 62 drehbar am jeweiligen Klappteil 22 gelagert. Die zweite Drehachse 62 verläuft dabei parallel zur vierten Drehachse 64 der jeweiligen Stufe 30.

Jedes der Verbindungselemente 211 weist darüber hinaus eine gelenkige Verbindung mit der Führungsleiste 21 um eine dritte Drehachse 63 auf. Letztere verlaufen senkrecht zu den zweiten Drehachsen 62. Die Befestigungen der Führungsleiste 21 mit den jeweiligen Stufen 30 weisen also zwei Freiheitsgrade auf: eine Drehung um die jeweilige zweite Drehachse 62 und ein Verschwenken um die jeweilige dritte Drehachse 63. Nur dadurch ist es möglich, dass alle Stufen 30 durch die Führungsleiste 21 miteinander gekoppelt sind und dennoch zusammen um die vierten Drehachsen 64 geklappt und um die ersten Drehachsen 61 verschwenkt werden können.

Die Verbindungselemente 211 weisen im hier gezeigten Ausführungsbeispiel eine Klammerform bzw. ein eckiges U-Profil auf, deren offenen Seiten zur Führungsleiste 21 weisen. In einem ausgeschwenkten Zustand der Stufen 30 (vgl. Figuren 4 und 5) umgreifen die klammerförmigen Verbindungselemente 211 die Führungsleiste 21.

Beim Auf- und Zuklappen der Stufen 30 um die vierten Drehachsen 64 erfolgt lediglich eine Relativdrehung zwischen den Verbindungselementen 211 und den Klappteilen 23 der Stufen 30 um die zweiten Drehachsen 62. Bei einer darauffolgenden Schwenkbewegung der zugeklappten Stufen 30 um die ersten Drehachsen 61 erfolgt gleichzeitig eine Drehung der Verbindungselemente 211 um die zweiten Drehachsen 62 und eine Schwenkbewegung der Verbindungselemente 211 relativ zur Führungsleiste 21 um die dritten Drehachsen 63.

Dieser Bewegungsablauf ist in den Figuren 4-6 dargestellt. In der Figur 1 befindet sich die Zugangsvorrichtung 10 in ihrer Zugangsstellung mit ausgeschwenkten und ausgeklappten Stufen 30, in der sie durch das Bedienpersonal begehbar bzw. besteigbar ist. Die Verbindungselemente 211 umgreifen die Führungsleiste 21. Um die Zugangsvorrichtung 10 in ihre Transportposition zu bringen, werden zunächst die Stufen 30 zugeklappt, indem die Klappteile 22 um die vierten Drehachsen 64 auf die Schwenkteile 23 geklappt werden. Diese Zwischenposition ist in der Figur 5 gezeigt. Nun können alle Stufen 30 gemeinsam um ihre seitlich zueinander beabstandeten ersten Drehachsen 61 verschwenkt werden. Dabei erfolgen die zuvor beschriebenen miteinander gekoppelten Bewegungen um die zweiten und dritten Drehachsen 62, 63. bei dieser Bewegung schwenkt die Führungsleiste 21 aus den Verbindungselementen 211 heraus.

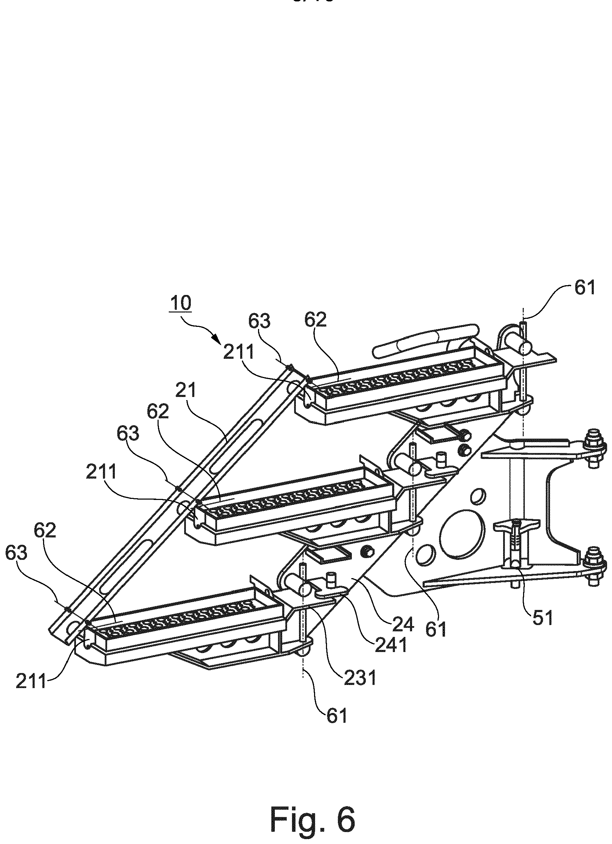

In der Transportstellung, welche in der Figur 6 gezeigt ist, ist die Führungsleiste 21 aus den U-förmigen Verbindungselementen 211 abgehoben und die Verbindungselemente 211 sind im Vergleich zur Zugangsstellung um einen Winkel α verdreht, welcher dem Winkel zwischen der Vertikalen und der Längsachse der Führungsleiste 21 in der Zugangsstellung (und auch in der Zwischenstellung gemäß Figur 5) entspricht. Der Winkel α ist zur Veranschaulichung in der Figur 4 eingezeichnet.

In der Transportstellung liegen die zusammengeklappten Stufen 30 an der Wange 24 an (in dem Sinne, dass sie an einer gedachten, durch die Wange 24 aufgespannten Ebene anliegen). In einer Draufsicht auf die Zugangsvorrichtung 10 liegen die Wange 24 und die Führungsleiste 21 nun nicht mehr nebeneinander, sondern im Wesentlichen übereinander. In jeder Stellung sind die Wange 24 und die Führungsleiste 21 aber parallel zueinander ausgerichtet.

Um die Zugangsvorrichtung 10 bzw. die Stufen 30 jeweils in der Transportstellung und der Zugangsstellung zu verriegeln bzw. zu sichern, sind in den Bereichen der unteren beiden Stufen 30 zwei zweite Verriegelungsvorrichtungen 241 vorgesehen. Diese umfassen jeweils einen Rastriegel mit einem Griff, welcher oberhalb der Stufen 30 angeordnet sind und über ein Federelement in Richtung der oberen Bleche 231 gedrückt werden. In den oberen Blechen 231 sind zwei Aussparungen 232 vorgesehen, in die die Rastriegel in der jeweiligen Endposition (Transport- oder Zugangsstellung) der Stufen 30 einrasten. Somit sind die Stufen 30 gesichert und können nicht ungewollt verschwenken. Um die Verriegelung zu lösen, müssen die Rastriegel der zweiten Verriegelungsvorrichtungen 241 per Hand angehoben werden, sodass sie aus den Aussparungen 232 herausgezogen werden. Selbstverständlich kann auch nur eine zweite Verriegelungsvorrichtung 241 oder aber mehr als zwei zweite Verriegelungsvorrichtungen 241 vorgesehen sein. Ebenfalls sind andere Verriegelungsmechanismen denkbar. Beispielsweise kann anstelle eines automatischen Einrastens vorgesehen sein, dass der Bediener den Rastriegel manuell schließen und dadurch die Verriegelung aktivieren muss.

In dem hier gezeigten Ausführungsbeispiel ist die erfindungsgemäße Zugangsvorrichtung 10 über den Schwenkrahmen 25 seitlich an einem Raupenträger 14 um eine fünfte Drehachse 65 schwenkbar gelagert, welche durch Verbindungsmittel 50 gebildet wird.

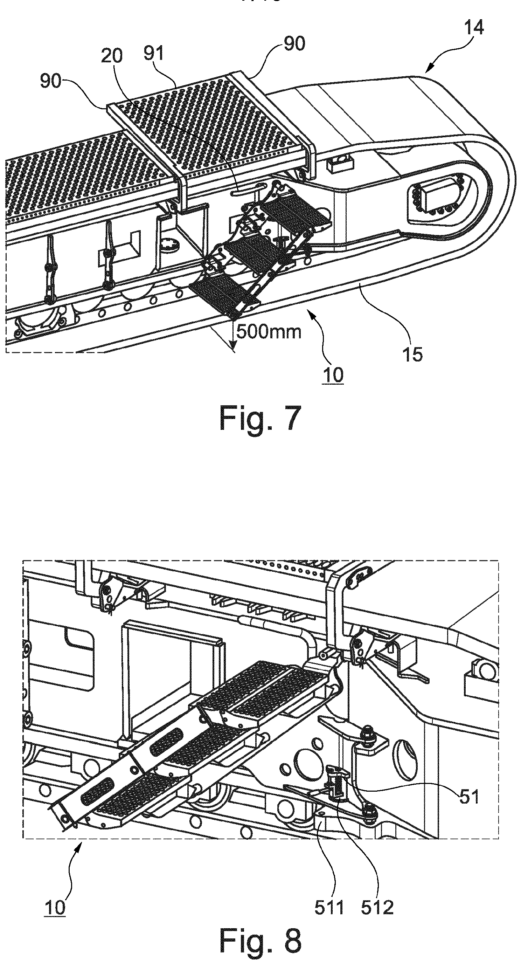

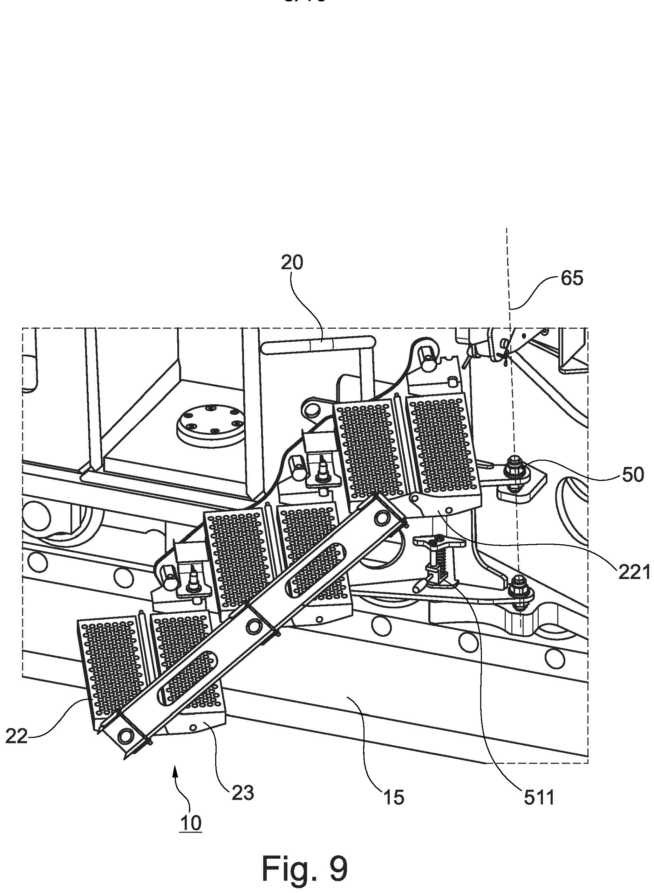

Die Figuren 7 und 8 zeigen die Zugangsvorrichtung 10 in einem eingeschwenkten Zustand (= Einklappstellung), in dem sie am Raupenträger 14 anliegt. Auch in der Einklappstellung kann der Bediener über die Zugangsvorrichtung 10 ein oberhalb des Raupenträgers 14 über zwei Podestträger 90 gehaltenes Podest 91 erreichen und über dieses wiederum den Oberwagen 2 besteigen. Um den Zugang zu erleichtern, kann die Zugangsvorrichtung 10 wie bereits erläutert um die fünfte Drehachse 65 um einen gewissen Winkel (z.B. 30° oder mehr) vom Raupenträger 14 weg verschwenkt werden. Diese Stellung (= Ausklappstellung), in der die unterste Stufe 30 der Zugangsvorrichtung 10 außerhalb der Raupenkette 15 liegt, ist in der Figur 9 in einer perspektivischen Ansicht und in der Figur 10 in einer Draufsicht gezeigt. Zu bemerken ist, dass auch in der Einklappstellung die Klapp-Schwenk-Treppe 10 eine vorgabegerechte Breite aufweist und als Aufstieg nutzbar ist.

Am Schwenkrahmen 25 ist eine erste Verriegelungsvorrichtung 51 vorgesehen, mit welcher der Schwenkrahmen 25 und somit die Zugangsvorrichtung 10 jeweils in der Einklappstellung und in der Ausklappstellung verriegelbar ist. Das Prinzip ist vorzugsweise identisch zum zuvor erläuterten Prinzip der Verriegelung mittels der zweiten Verriegelungsvorrichtung 241. Hierbei wirkt ein federunterstützter Rastriegel mit zwei Aussparungen 511 und 512 zusammen, die in einem Element des Raupenträgers 14 vorgesehen sind (vgl. Figur 8). In den jeweiligen Endpositionen des Schwenkrahmens 25 rastet der Rastriegel in die entsprechenden Aussparungen 511, 512 ein und muss manuell entriegeln werden, um eine Schwenkbewegung wieder freizugeben.

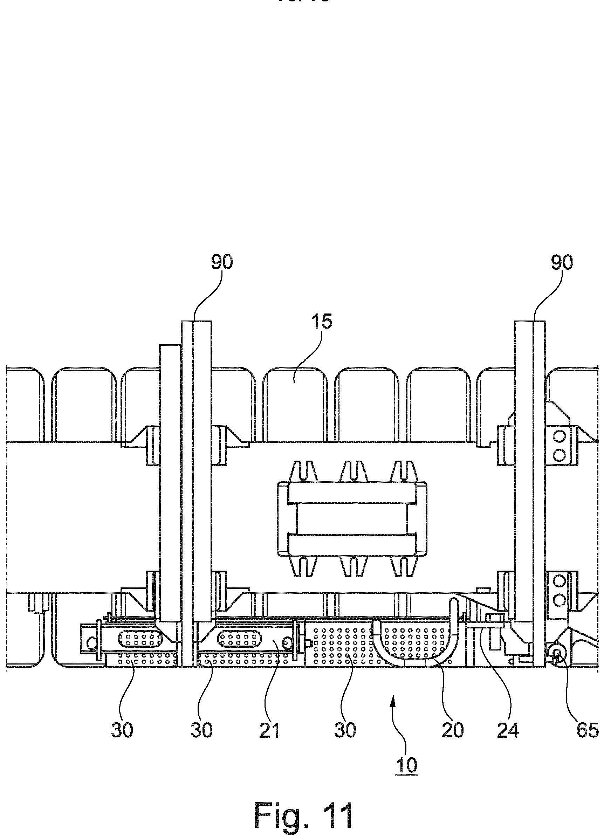

Die Figur 11 zeigt die erfindungsgemäße Zugangsvorrichtung 10 in der Transportstellung in einer Draufsicht, wobei zusätzlich der untere Teil des Raupenträgers 14 mit der Raupenkette 15 eingeblendet ist. Die Zugangsvorrichtung 10 ist um die fünfte Drehachse 65 vollständig an den Raupenträger 14 herangeschwenkt. Zusätzlich sind die Stufen 30 um die ersten Drehachsen 61 verschwenkt.

Wie in der Figur 11 zu erkennen ist, ist die Klapp-Schwenk-Treppe 10 in ihrer Transportstellung derart eingeschwenkt, dass ihre Außenkontur nicht über die Bodenplatten der Raupenkette 15 hinausragt.

Zu bemerken ist, dass der Teleskopraupenkran 1 als gesamte Transporteinheit im öffentlichen Straßenverkehr transportiert wird. Folglich ist zum Straßentransport nur die Außenseite der Raupenträger 14 für die Transportbreite relevant. In der Transportstellung verbreitert die Zugangsvorrichtung 10 daher nicht die tatsächliche Transportbreite des Teleskopraupenkrans 1.

In der Transportstellung ist die Klapp-Schwenk-Treppe 10 mittels der ersten Verriegelungsvorrichtung 51 und mittels der beiden zweiten Verriegelungsvorrichtungen 241 gesichert. So hält die Klapp-Schwenk-Treppe 10 in ihrer Transportstellung auch während des Transports sicher im zweifach eingeschwenkten Zustand (um die Drehachsen 61 und 65).

Die Stufen der Zugangsvorrichtung 10 sind vorzugsweise so angeordnet und geformt, dass die geforderten Treppenstufen-Mindestmaße eingehalten werden (insbesondere gemäß FEM 5.022, 1. Auflage, 28.05.2015: Lichte Weite ≥ 400 mm, Stufenhöhe = 250 mm, Auftrittbreite ≥ 300 mm).

Die erfindungsgemäße Klapp-Schwenk-Treppe 10 weist eine Reihe von Vorteilen gegenüber bisherigen Zugangslösungen auf:
- Zugang zur Krankabine ist in jeder möglichen Kranposition (360°) möglich.
- Einfache, leichte Handhabung.
- Ortsfester Aufstieg (keine abnehmbare Lösung, die separat transportiert werden muss).
- Keine Sprossen, kein Leiteraufstieg, da hierbei beidseitig Griffe / Geländer erforderlich wären.
- Zugang über eine Treppe, bei der die Treppenstufen-Mindestmaße eingehalten werden können (nach FEM 5.022, 1. Auflage, 28.05.2015).

### Bezugszeichenliste:

- 1: Arbeitsgerät (Teleskopraupenkran)
- 2: Oberwagen
- 3: Unterwagen
- 4: Fahrerkabine bzw. Krankabine
- 5: Teleskopausleger
- 10: Zugangsvorrichtung
- 100: Boden
- 11: Oberwagenballast
- 12: Wippantrieb (Wippzylinder)
- 14: Raupenträger
- 15: Raupenkette
- 20: Handgriff
- 21: Führungsleiste
- 211: Verbindungselement
- 22: Klappteil
- 221: Anschlag
- 23: Schwenkteil
- 231: Blech
- 232: Aussparung
- 233: Blech
- 24: Wange
- 25: Träger (Schwenkrahmen)
- 241: Zweite Verriegelungsvorrichtung
- 30: Stufe
- 50: Verbindungsmittel
- 51: Erste Verriegelungsvorrichtung
- 511: Aussparung
- 512: Aussparung
- 61: Erste Drehachse
- 62: Zweite Drehachse
- 63: Dritte Drehachse
- 64: Vierte Drehachse
- 65: Fünfte Drehachse
- 70: Befestigungselement
- 80: Trittfläche
- 90: Podestträger
- 91: Podest
- α: Winkel

## Patentansprüche

1. Zugangsvorrichtung (10) für ein Arbeitsgerät (1), insbesondere für einen fahrbaren Kran, umfassend eine Wange (24), mindestens zwei seitlich und in der Höhe zueinander versetzte und um jeweils eine vertikale erste Drehachse (61) schwenkbar an der Wange (24) gelagerte Stufen (30) sowie eine die Stufen (30) miteinander verbindende Führungsleiste (21), wobei die Führungsleiste (21) mit jeder der Stufen (30) an deren der Wange (24) gegenüberliegenden Ende über je ein Verbindungselement (211) derart schwenkbar verbunden ist, dass die Stufen (30) gemeinsam um ihre ersten Drehachsen (61) von einer Zugangsstellung, in der die Stufen (30) seitlich von der Wange (24) abstehen und die Zugangsvorrichtung begehbar ist, in eine Transportstellung, in der die Stufen (30) an der Wange (24) anliegen, bewegbar sind und umgekehrt.

2. Zugangsvorrichtung (10) nach Anspruch 1, wobei in der Zugangsstellung, in der Transportstellung sowie in jeder Zwischenstellung die Längsachsen der einzelnen Stufen (30) zueinander und/oder die Längsachsen der Wange (24) und der Führungsleiste (21) zueinander parallel verlaufen.

3. Zugangsvorrichtung (10) nach Anspruch 1 oder 2, wobei die Führungsleiste (21) mit jeder Stufe (30) über das jeweilige Verbindungselement (211) um eine zweite und dritte Drehachse (62, 63), welche nicht parallel zueinander stehen, schwenkbar verbunden ist, wobei vorzugsweise die zweite Drehachse (62) senkrecht zur dritten Drehachse (63) und/oder senkrecht zur ersten Drehachse (61) der jeweiligen Stufe (30) steht.

4. Zugangsvorrichtung (10) nach dem vorhergehenden Anspruch, wobei die Verbindungselemente (211) an den Stirnseiten der Stufen (30) um die zweiten Drehachsen (62) drehbar befestigt und um die dritten Drehachsen (63) schwenkbar mit der Führungsleiste (21) verbunden sind, wobei die Verbindungselemente (211) vorzugsweise klammerförmig, insbesondere U-förmig, ausgebildet sind und die Führungsleiste (21) in der Zugangsstellung zumindest teilweise umgreifen.

5. Zugangsvorrichtung (10) nach einem der vorhergehenden Ansprüche, wobei die Stufen (30) klappbar ausgeführt sind und jeweils ein um die erste Drehachse (61) schwenkbar an der Wange (24) gelagertes Schwenkteil (23) sowie ein mit dem Schwenkteil (23) um eine vierte Drehachse (64) schwenkbar verbundenes Klappteil (22) umfassen, wobei vorzugsweise die vierte Drehachse (64) parallel zur Längsachse der Stufe (30) und/oder senkrecht zur ersten Drehachse (61) der Stufe (30) verläuft.

6. Zugangsvorrichtung (10) nach dem vorhergehenden Anspruch, wobei die Schwenkteile (23) und Klappteile (22) jeweils Trittflächen (80) aufweisen, welche in einer aufgeklappten ersten Stellung eine gemeinsame Trittfläche bilden und in einer zugeklappten zweiten Stellung aufeinander liegen, wobei vorzugsweise an den Schwenkteilen (23) und Klappteilen (22) Anschläge (221) vorgesehen sind, welche ein Überschwenken der Klappteile (22) über die erste Stellung hinaus verhindern.

7. Zugangsvorrichtung (10) nach Anspruch 5 oder 6, wobei die Führungsleiste (21) mit den Klappteilen (22) jeweils um eine zur vierten Drehachse (64) parallele Drehachse drehbar verbunden ist, sodass die Klappteile (22) um die jeweiligen vierten Drehachsen (64) gemeinsam verschwenkbar sind.

8. Zugangsvorrichtung (10) nach einem der vorhergehenden Ansprüche, wobei seitlich an der Wange (24) je Stufe (30) mindestens ein Befestigungselement (70) vorgesehen ist, welches insbesondere unterhalb der jeweiligen Stufe (30) angeordnet ist und mit welchen die Stufen (30) um die ersten Drehachsen (61) schwenkbar verbunden sind, wobei vorzugsweise je Stufe (30) zwei Befestigungselemente (70) vorgesehen sind, welche oberhalb und unterhalb der jeweiligen Stufe (30) angeordnet sind.

9. Zugangsvorrichtung (10) nach einem der vorhergehenden Ansprüche, ferner umfassend einen Träger (25), welcher mit der Wange (24) verbunden oder an dieser ausgebildet ist und welcher Verbindungsmittel (50) aufweist, über die der Träger (25) mit einer Struktur, insbesondere einem Arbeitsgerät (1), verbindbar oder verbunden ist, wobei die Verbindungsmittel (50) eine vorzugsweise vertikale fünfte Drehachse (65) bilden, um die der Träger (25) und somit die gesamte Zugangsvorrichtung (10) schwenkbar ist.

10. Zugangsvorrichtung (10) nach dem vorhergehenden Anspruch, wobei der Träger (25) eine erste Verriegelungsvorrichtung (51) umfasst, mittels welcher der Träger (25) jeweils in einer Einklappstellung und in einer relativ dazu um die fünfte Drehachse (65) verschwenkten Ausklappstellung lösbar verriegelbar ist, wobei die erste Verriegelungsvorrichtung (51) vorzugsweise derart ausgebildet ist, dass sie in der Einklappstellung und in der Ausklappstellung automatisch einrastet und nur durch insbesondere manuelle Betätigung wieder entriegelbar ist.

11. Zugangsvorrichtung (10) nach einem der vorhergehenden Ansprüche, ferner umfassend eine zweite Verriegelungsvorrichtung (241), mittels welcher die Zugangsvorrichtung (10) in der Zugangsstellung und/oder in der Transportstellung lösbar verriegelbar ist, wobei die zweite Verriegelungsvorrichtung (241) vorzugsweise derart ausgebildet ist, dass sie in der Zugangsstellung und/oder in der Transportstellung automatisch einrastet und nur durch insbesondere manuelle Betätigung wieder entriegelbar ist.

12. Zugangsvorrichtung (10) nach einem der vorhergehenden Ansprüche, wobei mindestens drei Stufen (30) vorgesehen sind.

13. Zugangsvorrichtung (10) nach einem der vorhergehenden Ansprüche, ferner umfassend einen Handgriff oder Handlauf (20), wobei der Handgriff oder Handlauf (20) an der Wange (24) vorgesehen ist oder wobei die Zugangsvorrichtung (10) nach einem der Ansprüche 9 bis 10 weitergebildet und der Handgriff oder Handlauf (20) am Träger (25) vorgesehen ist.

14. Arbeitsgerät (1), insbesondere fahrbarer Kran, weiter insbesondere Raupenkran, mit einer Zugangsvorrichtung (10) nach einem der vorhergehenden Ansprüche, wobei die Zugangsvorrichtung (10) insbesondere permanent am Arbeitsgerät (1) befestigt ist.

15. Arbeitsgerät (1) nach dem vorhergehenden Anspruch, ferner umfassend einen Unterwagen (3) mit zwei Raupenträgern (14) und einen um eine vertikale Achse drehbar auf dem Unterwagen (3) gelagerten Oberwagen (2), wobei mindestens einer der Raupenträger (14) an dessen Außenseite eine Zugangsvorrichtung (10) aufweist und wobei die Zugangsvorrichtung (10) in der Transportstellung nicht über die Außenkontur des Raupenträgers (14) hinausragt.

## Claims

1. Access device (10) for a working apparatus (1), more particularly for a mobile crane, comprising a cheek (24), at least two steps (30) which are laterally and vertically offset with respect to one another and supported on the cheek (24) pivotably about a vertical first rotational axis (61), and a guide bar (21) which connects the steps (30), wherein the guide bar (21) is connected, at the end of the step opposite the cheek (24), to each step (30) via a in each case one connection element (211) pivotably such that the steps (30) can be jointly moved about their first rotational axes (61) from an access position, in which the steps (30) project laterally from the cheek (24) and in which the access device can be walked on, to a transport position, in which the steps (30) rest against the cheek (24), and vice versa.

2. Access device (10) according to claim 1, wherein in the access position, in the transport position and in every intermediate position, the longitudinal axes of the individual steps (30) extend parallel to one another and/or the longitudinal axes of the cheek (24) and the guide bar (21) extend parallel to one another.

3. Access device (10) according to claim 1 or 2, wherein the guide bar (21) is connected to every step (30) via the respective connection element (211) pivotably about a second and third rotational axis (62, 63), which are not parallel to one another, wherein preferably the second rotational axis (62) is perpendicular to the third rotational axis (63) and/or perpendicular to the first rotational axis (61) of the respective step (30).

4. Access device (10) according to the preceding claim, wherein the connection elements (211) are fastened on the end faces of the steps (30) rotatably about the second rotational axes (62) and pivotably connected to the guide bar (21) about the third rotational axes (63), wherein the connection elements (211) are configured preferably clip-shaped, more particularly U-shaped, and at least partially engage around the guide bar (21) in the access position.

5. Access device (10) according to one of the preceding claims, wherein the steps (30) are designed to be foldable and each comprise a pivoting part (23) supported on the cheek (24) pivotably about the first rotational axis (61) and further comprise a folding part (22) connected to the pivoting part (23) pivotably about a fourth rotational axis (64), wherein preferably the fourth rotational axis (64) extends parallel to the longitudinal axis of the step (30) and/or perpendicular to the first rotational axis (61) of the step (30).

6. Access device (10) according to the preceding claim, wherein the pivoting parts (23) and folding parts (22) each have tread areas (80) which in a folded-out first position form a common tread area and in a folded-in second position lie one on top of the other, wherein on the pivoting parts (23) and folding parts (22), stops (221) are preferably provided which prevent the folding parts (22) from being pivoted beyond the first position.

7. Access device (10) according to claim 5 or 6, wherein the guide bar (21) is connected to the folding parts (22) in each case rotatably about a rotational axis parallel to the fourth rotational axis (64), so that the folding parts (22) can be pivoted jointly about the respective fourth rotational axes (64).

8. Access device (10) according to one of the preceding claims, wherein laterally on the cheek (24) each step (30) is provided with at least one fastening element (70), which is arranged more particularly below the respective step (30) and with which the steps (30) are connected pivotably about the first rotational axes (61), wherein preferably two fastening elements (70) are provided for each step (30), which fastening elements are arranged above and below the respective step (30).

9. Access device (10) according to one of the preceding claims, further comprising a carrier (25), which is connected to the cheek (24) or formed on same and which has connection means (50) via which the carrier (25) can be or is connected to a structure, more particularly a working apparatus (1), wherein the connection means (50) form a preferably vertical fifth rotational axis (65) about which the carrier (25) and thus the entire access device (10) can be pivoted.

10. Access device (10) according to the preceding claim, wherein the carrier (25) comprises a first locking device (51), by means of which the carrier (25) can be locked in a releasable manner in a fold-in position and in a fold-out position, relative thereto, pivoted about the fifth rotational axis (65), wherein the first locking device (51) is preferably designed such that it automatically snaps into place in the fold-in position and in the fold-out position and can only be unlocked again by more particularly manual actuation.

11. Access device (10) according to one of the preceding claims, further comprising a second locking device (241), by means of which the access device (10) can be locked in a releasable manner in the access position and/or in the transport position, wherein the second locking device (241) is preferably designed such that it automatically snaps into place in the access position and/or in the transport position and can only be unlocked again by a more particularly manual actuation.

12. Access device (10) according to one of the preceding claims, wherein at least three steps (30) are provided.

13. Access device (10) according to one of the preceding claims, further comprising a handgrip or handrail (20), wherein the handgrip or handrail (20) is provided on the cheek (24) or wherein the access device (10) according to one of claims 9 to 10 is developed and the handgrip or handrail (20) is provided on the carrier (25).

14. Working apparatus (1), more particularly a mobile crane, further more particularly a crawler crane, having an access device (10) according to one of the preceding claims, wherein the access device (10) is more particularly permanently fastened on the working apparatus (1).

15. Working apparatus (1) according to the preceding claim, further comprising an undercarriage (3) with two crawlers (14), and comprising an upper carriage (2) supported on the undercarriage (3) to slew about a vertical axis, wherein at least one of the crawlers (14) has, on its outer side, an access device (10) and wherein the access device (10), in the transport position, does not project beyond the outer contour of the crawler (14).

## Revendications

1. Dispositif d'accès (10) pour un engin de travail (1), en particulier pour une grue mobile, comprenant une joue (24), au moins deux marches (30) décalées latéralement et en hauteur l'une par rapport à l'autre et montées sur la joue (24) de manière à pouvoir pivoter respectivement autour d'un premier axe de rotation vertical (61) ainsi qu'une barre de guidage (21) reliant les marches (30) entre elles, dans lequel la barre de guidage (21) est reliée de manière à pouvoir pivoter à chacune des marches (30) sur leur extrémité opposée à la joue (24) par l'intermédiaire respectivement d'un élément de liaison (211) de telle manière que les marches (30) peuvent être déplacées conjointement autour de leurs premiers axes de rotation (61) depuis une position d'accès, dans laquelle les marches (30) dépassent latéralement de la joue (24) et le dispositif d'accès est accessible, dans une position de transport, dans laquelle les marches (30) reposent sur la joue (24), et vice versa.

2. Dispositif d'accès (10) selon la revendication 1, dans lequel dans la position d'accès, dans la position de transport et dans chaque position intermédiaire, les axes longitudinaux des différentes marches (30) s'étendent de manière parallèle les uns par rapport aux autres et/ou les axes longitudinaux de la joue (24) et la barre de guidage (21) s'étendent de manière parallèle les uns par rapport aux autres.

3. Dispositif d'accès (10) selon la revendication 1 ou 2, dans lequel la barre de guidage (21) est reliée de manière à pouvoir pivoter à chaque marche (30) par l'intermédiaire de l'élément de liaison (211) respectif autour d'un deuxième et d'un troisième axe de rotation (62, 63), lesquels ne sont pas parallèles l'un par rapport à l'autre, dans lequel de préférence le deuxième axe de rotation (62) est perpendiculaire par rapport au troisième axe de rotation (63) et/ou est perpendiculaire par rapport au premier axe de rotation (61) de la marche (30) respective.

4. Dispositif d'accès (10) selon la revendication précédente, dans lequel les éléments de liaison (211) sont fixés sur les côtés frontaux des marches (30) de manière à pouvoir tourner autour des deuxièmes axes de rotation (62) et sont reliés à la barre de liaison (21) de manière à pouvoir pivoter autour des troisièmes axes de rotation (63), dans lequel les éléments de liaison (211) sont réalisés de préférence en forme de pince, en particulier en forme de U et entourent au moins en partie la barre de guidage (21) dans la position d'accès.

5. Dispositif d'accès (10) selon l'une quelconque des revendications précédentes, dans lequel les marches (30) sont conçues de manière à être rabattables et comprennent respectivement une partie pivotante (23) montée sur la joue (24) de manière à pouvoir pivoter autour du premier axe de rotation (61) ainsi qu'une partie rabattable (22) reliée à la partie pivotante (23) de manière à pouvoir pivoter autour d'un quatrième axe de rotation (64), dans lequel de préférence le quatrième axe de rotation (64) s'étend de préférence de manière parallèle par rapport à l'axe longitudinal de la marche (30) et/ou de manière perpendiculaire par rapport au premier axe de rotation (61) de la marche (30).

6. Dispositif d'accès (10) selon la revendication précédente, dans lequel les parties pivotantes (23) et les parties rabattables (22) présentent respectivement des surfaces de marche (80), lesquelles forment une surface de marche commune dans une première position ouverte et se superposent dans une deuxième position refermée, dans lequel de préférence sont prévues, sur les parties pivotantes (23) et les parties rabattables (22), des butées (221), lesquelles empêchent les parties rabattables (22) de pivoter au-delà de la première position.

7. Dispositif d'accès (10) selon la revendication 5 ou 6, dans lequel la barre de guidage (21) est reliée de manière à pouvoir tourner aux parties rabattables (22) respectivement autour d'un axe de rotation parallèle au quatrième axe de rotation (64) de telle sorte que les parties rabattables (22) peuvent être pivotées conjointement autour des quatrièmes axes de rotation (64) respectifs.

8. Dispositif d'accès (10) selon l'une quelconque des revendications précédentes, dans lequel au moins un élément de fixation (70) est prévu sur le côté de la joue (24) pour chaque marche (30), lequel est disposé en particulier en dessous de la marche (30) respective et avec lequel les marches (30) sont reliées de manière à pouvoir pivoter autour des premiers axes de rotation (61), dans lequel de préférence deux éléments de fixation (70) sont prévus par marche (30), lesquels sont disposés au-dessus et en dessous de la marche (30) respective.

9. Dispositif d'accès (10) selon l'une quelconque des revendications précédentes, comprenant en outre un support (25), qui est relié à la joue (24) ou est réalisé sur celle-ci et qui présente des moyens de liaison (50), par l'intermédiaire desquels le support (25) peut être relié ou est relié à une structure , en particulier un engin de travail (1), dans lequel les moyens de liaison (50) forment un cinquième axe de rotation (65) de préférence vertical, autour duquel le support (25) et donc l'ensemble du dispositif d'accès (10) peuvent être pivotés.

10. Dispositif d'accès (10) selon la revendication précédente, dans lequel le support (25) comprend un premier dispositif de verrouillage (51), au moyen duquel le support (25) peut être verrouillé de manière amovible respectivement dans une position repliée et dans une position dépliée pivotée par rapport à celle-ci autour du cinquième axe de rotation (65), dans lequel le premier dispositif de verrouillage (51) est de préférence réalisé de telle manière qu'il s'enclenche automatiquement dans la position repliée et dans la position dépliée et qu'il ne peut être déverrouillé à nouveau que par un actionnement manuel.

11. Dispositif d'accès (10) selon l'une quelconque des revendications précédentes, comprenant en outre un deuxième dispositif de verrouillage (241), au moyen duquel le dispositif d'accès (10) peut être verrouillé de manière amovible dans la position d'accès et/ou dans la position de transport, dans lequel le deuxième dispositif de verrouillage (241) est réalisé de préférence de telle manière qu'il s'enclenche automatiquement dans la position d'accès et/ou dans la position de transport et ne peut être déverrouillé à nouveau que par un actionnement manuel.

12. Dispositif d'accès (10) selon l'une quelconque des revendications précédentes, dans lequel au moins trois marches (30) sont prévues.

13. Dispositif d'accès (10) selon l'une quelconque des revendications précédentes, comprenant en outre une poignée ou une main courante (20), dans lequel la poignée ou la main courante (20) est prévue sur la joue (24) ou dans lequel le dispositif d'accès (10) selon l'une quelconque des revendications 9 à 10 est perfectionné et la poignée ou la main courante (20) est prévue sur le support (25).

14. Engin de travail (1), en particulier grue mobile, par ailleurs en particulier grue sur chenilles, avec un dispositif d'accès (10) selon l'une quelconque des revendications précédentes, dans lequel le dispositif d'accès (10) est fixé en particulier en permanence sur l'engin de travail (1).

15. Engin de travail (1) selon la revendication précédente, comprenant en outre un châssis inférieur (3) avec deux supports de chenilles (14) et un châssis supérieur (2) monté sur le châssis inférieur (3) de manière à pouvoir tourner autour d'un axe vertical, dans lequel au moins un des supports de chenilles (14) présente sur son côté extérieur un dispositif d'accès (10) et dans lequel le dispositif d'accès (10) ne dépasse pas du contour extérieur du support de chenilles (14) dans la position de transport.
